Europäisches Patentamt

European Patent Office

Office européen des brevets

(19)

(11) Veröffentlichungsnummer: **0 371 273**

**A2**

(12) **EUROPÄISCHE PATENTANMELDUNG**

(21) Anmeldenummer: **89120334.1**

(22) Anmeldetag: **03.11.89**

(51) Int. Cl.⁵: **G11B 33/02**

(30) Priorität: **01.12.88 DE 8814932 U**

(43) Veröffentlichungstag der Anmeldung:
**06.06.90 Patentblatt 90/23**

(84) Benannte Vertragsstaaten:
**AT DE FR IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Mamet, Alfred Grundig E.M.V. Max**
**Grundig**
**holländ. Stiftung & Co KG Kurgartenstrasse**
**37**
**D-8510 Fürth/Bay(DE)**

(54) **Batteriebetriebenes und am Körper eines Benutzers leicht befestigbares Gerät zur Wiedergabe von elektroakustischen Signalen.**

(57) Es wird ein, leicht am Körper eines Benutzers befestigbares, kleines Gerät zur Wiedergabe von elektroakustischen Signalen über Kleinkopfhörer (10) beschrieben.

Dieses Gerät, dessen Gehäuse (2) eine rechteckige Grundform aufweist, besitzt eine leicht nach außen gewölbte, mit der Rückseite des Gehäuses verbundene Anlageplatte (3) in deren Mitte sich ein Clip (6) zum Halten des Gerätes am Gürtelbund des Benutzers befindet.

Die ungefähr der menschlichen Körperform angepaßte Anlageplatte (3) ist so gestaltet, daß sich zwischen der Anlageplatte und dem Gerät keilförmige Ausbuchtungen ergeben, in die das Kabel (5) des Kleinkopfhörers (10) gewickelt werden kann.

Die Ausgestaltung des Clips (6) erlaubt bei Nichtbenutzung des Gerätes das Halten des Kleinkopfhörers.

Fig.1

# BATTERIEBETRIEBENES UND AM KÖRPER EINES BENUTZERS LEICHT BEFESTIGBARES GERÄT ZUR WIEDERGABE VON ELEKTROAKUSTISCHEN SIGNALEN

Die Neuerung betrifft ein batteriebetriebenes und am Körper eines Benutzers leicht befestigbares Gerät zur Wiedergabe von elektroakustischen Signalen, wobei die Signale vorzugsweise von einem miniaturisierten Kassettenrecorder über einen Kleinkopfhörer mit Kopfhörerkabel wiedergegeben werden.

Es sind am Körper eines Benutzers leichtbefestigbare Geräte zur Wiedergabe von Hörereignissen bekannt, die vorwiegend aus Rundfunkgeräte oder aus einem Kassettengerät oder aus einer Kombination beider Geräte bestehen und das Abhören über einen Kopfhörer erfolgt. Der Kopfhörer, der eine besonders leichte und kleine Bauform aufweist, wird über ein flexibles Kopfhörerkabel mittels einer Steckverbindung mit dem Gerät verbunden. Aus der DE-PS 28 13 000 ist eine elektroakustische Anordnung für die stereophone Wiedergabe von Hörereignissen bekannt, bei der verschiedene Geräte dieser Art, insbesondere ein Tonbandkassettengerät, am Gurtband eines Benutzers befestigt ist und die akustische Wiedergabe über einen Kopfhörer erfolgt. Der Kopfhörer ist hierbei über ein Kabel mit dem am Gurtband befestigten Wiedergabegerät verbunden.

Nachteilig ist bei Geräten der geschilderten Art, daß bei Nichtbenutzung dieser Geräte keine Passende Möglichkeit zum Unterbingen des Kopfhörers bzw. insbesondere des Kopfhörerkabels vorgesehen ist.

Die der Neuerung zugrunde liegende Aufgabe besteht nun darin, ein batteriebetriebenes und am Körper leicht befestigbares Gerät zur Wiedergabe von elektroakustischen Signalen zu schaffen, das sich an die Körperform eines Benutzers möglichst gut anschmiegt, und das bei Nichtbenutzung eine einfache Unterbringungsmöglichkeit für das Kopfhörerkabel und den Kleinkopfhörer aufweist.

Diese Aufgabe wird durch die kennzeichnenden Merkmale im Anspruch 1 gelöst.

Die Unteransprüche zeigen vorteilhafte Ausgestaltungen der Neuerung.

Die Neuerung wird nachfolgend anhand der Zeichnungen erläutert.

Fig. 1 ist eine Geräteansicht auf die Rückseite eines am Körper eines Benutzers anzubringenden Kassettenrecorders,

Fig. 2 ist eine Seitenansicht eines Kassettenrecorders nach Fig. 1, jedoch mit am Gerät befestigten Kleinkopfhörer mit zugeordnetem Kopfhörerkabel und

Fig. 3 ist eine Seitenansicht des Gerätes ähnlich der Fig. 2, jedoch bei abgenommenen Kleinkopfhörer.

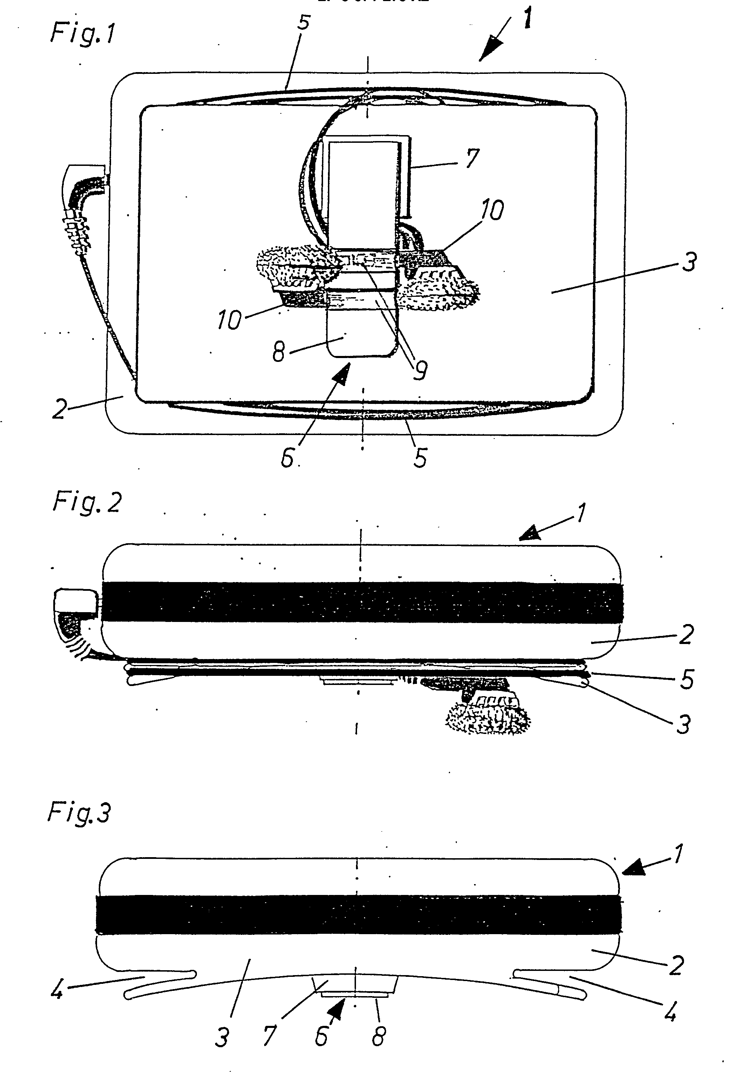

In der Fig. 1 ist die Rückseite eines Kassettenrecorders 1 zu erkennen, der aus einem Gehäuse 2 besteht, in das die nicht näher dargestellten und nur von der nicht gezeichneten Frontseite erkennbaren Geräte-Funktionsteile, wie Kassettenlaufwerk, Bedienelemente, die Elektronik, das Batteriefach und andere Funktionsteile eingesetzt sind. Die Rückseite zeigt jedoch, daß das Gehäuse 2 eine rechteckige Grundform aufweist. Ferner ist in der dargestellten Figur auf der Rückseite des Gehäuses eine leicht nach außen gewölbte Anlageplatte 3 aufgesetzt, die der Anpassung des Gerätes an die menschliche Körperform und zur Befestigung des Gerätes am Gürtelbund eines Benutzers dient. Die Anlageplatte 3 ist einstückig mit dem Gehäuse 2 verbunden und derart nach außen gewölbt, daß sich zwischen Anlageplatte und Gehäuserückseite im schmalen Gehäuseseitenbereich eine keilförmige Einbuchtung 4 ergibt. Durch eine derartige Ausgestaltung der Anlageplatte ergibt sich unter Einbeziehung des rückwertigen Teils des Gehäuses eine Haspel auf die das für den Kleinkopfhörer erforderliche Kopfhörerkabel 5 aufzuwickeln ist. Mittig zur Anlageplatte 3 befindet sich an der Gehäuserückseite des Gerätes eine für die Gerätehalterung am Gürtelbund eines Benutzers dienender Clip 6. Der Clip besteht aus einem Abstandsstück 7 und einem federnden Zungenteil 8. Das federnde Zungenteil weist zwei Sicken 9 auf, die der Halterung eines in den Clip eingeklemmten Kleinkopfhörers 10 dienen. Da Geräte dieser Art vorwiegend für stereophone Wiedergabe ausgelegt sind, ist das federnde Zungenteil 8 so ausgebildet, daß wenigstens zwei Kleinkopfhörer festzuklemmen sind. Bei Nichtbenutzung des Gerätes ist somit der Stereo-Kleinkopfhörer mit zugeordnetem Kopfhörerkabel dem Gerät zugeordnet und bei Benutzung des Gerätes ist der Kleinkopfhörer jederzeit griffbereit mit dem Gerät zu einer Einheit zusammengefaßt.

Die Fig. 2 und 3 zeigt je eine Seitenansicht des Gerätes in Form eines Kassettenrecorders, wobei die Fig. 2 das zwischen der Anlageplatte 3 und dem rückwertigen Teil des Gehäuses aufgewickelte Kopfhörerkabel 5 des Kleinkopfhörers zeigt. In der Fig. 3 ist zu erkennen, wie die keilförmige Einbuchtung 4, die sich zwischen der Anlageplatte 3 und dem rückwertigen Teil des Gehäuses 2 bei abgewickeltem Kopfhörerkabel ergibt, ausgebildet ist. Das Abstandstück 7 des Clips 6 ist einstückig mit dem Gehäuse bzw. der Anlageplatte 3 verbunden. Das federnde Zungenteil 8 kann als Blattfederteil ausgebildet sein und in entsprechende Führungen des Abstandstückes 7 zur Halterung eingeschoben sein. Es ist jedoch auch möglich, daß das federnde Zungenteil 8 ebenfalls einstückig mit den übrigen Gehäuseteilen verbunden ist.

**Ansprüche**

1. Batteriebetriebenes und am Körper eines Benutzers leicht befestigbares Gerät zur Wiedergabe von elektroakustischen Signalen, wobei die Signale vorzugsweise von einem miniaturisierten Kassettenrecorder (1) über einen Kleinkopfhörer (10) mit Kopfhörerkabel (5) wiedergegeben werden, **dadurch gekennzeichnet,** daß das Gerät ein aus einer rechteckigen Grundform bestehendes Gehäuse (2) aufweist, daß auf der Rückseite des Gehäuses, zur Anpassung an die menschliche Körperform und zur Befestigung des Gerätes am Gürtelbund eines Benutzers, eine leicht nach außen gewölbte Anlageplatte (3) aufgesetzt und einstückig mit dem Gehäuse verbunden ist, daß sich zwischen Anlageplatte und Gehäuserückseite im schmalen Gehäuseseitenbereich eine keilförmige Einbuchtung (4) ergibt, in die bedarfsweise das Kopfhörerkabel (5) des Kleinkopfhörers (10) aufgewickelt ist.

2. Batteriebetriebenes und am Körper eines Benutzers leicht befestigbares Gerät nach Anspruch 1, **dadurch gekennzeichnet,** daß an der Gehäuserückseite des Gerätes mittig zur Anlageplatte ein der Gerätehalterung am Gürtelbund eines Benutzers dienender Clip (6) angebracht ist, wobei der Clip aus einem Abstandstück (7) und einem federnden Zungenteil (8) besteht.

3. Batteriebetriebenes und am Körper eines Benutzers leicht befestigbares Gerät nach Anspruch 2, **dadurch gekennzeichnet,** daß in das federnde Zungenteil (8) des Clips (6) wenigstens zwei Sikken (9) zur Halterung wenigstens eines Kleinkopfhörers (10) eingeprägt sind.

Fig.1

Fig.2

Fig.3